# EUROPÄISCHE PATENTANMELDUNG

(11) **EP 4 804 008 A1**
(43) Veröffentlichungstag der Anmeldung: **09.09.2026**
(21) Anmeldenummer: 25161263.6
(22) Anmeldetag: 03.03.2025
(51) Int. Cl.: G06F 3/16, G06N 3/08, G06V 10/82

(54) **SYSTEM ZUR UNTERSTÜTZUNG EINES BENUTZERS BEI DER AUSWERTUNG VON BILDDATEN**

(71) Anmelder: SICK AG, 79183 Waldkirch (DE)
(72) Erfinder: FISCHER, Tim, 79115 Freiburg (DE); SCHMITT, Peter, 79312 Emmendingen (DE); SCHWER, Felix, 79104 Freiburg (DE)
(74) Vertreter: Manitz Finsterwald Patent- und Rechtsanwaltspartnerschaft mbB

(57) **Zusammenfassung**

Die Erfindung betrifft ein System, insbesondere Sicherheitssystem, zur Unterstützung eines Benutzers bei der Analyse von Bilddaten, umfassend: zumindest eine Kamera zur Erfassung einer Umgebung und Erzeugung von zugehörigen Bilddaten, eine Datenverarbeitungseinheit, welche zumindest ein KI-Modell mit Zero-Shot-Fähigkeit zur Verarbeitung der Bilddaten umfasst, und eine Benutzerschnittstelle zur Eingabe einer Benutzeranfrage in natürlicher Sprache, wobei das KI-Modell ausgebildet ist, basierend auf den Bilddaten und der Benutzeranfrage eine Ausgabeinformation als Antwort auf die Benutzeranfrage, insbesondere in Echtzeit, auszugeben und wobei die Datenverarbeitungseinheit ausgebildet ist, basierend auf der Ausgabeinformation eine Antwortaktion auszulösen.

## Beschreibung

Die Erfindung betrifft ein System sowie ein Verfahren zur Unterstützung eines Benutzers bei der Auswertung von Bilddaten.

In vielen industriellen Applikationen finden zunehmend Bildverarbeitungssysteme Anwendung wie z.B. Computer-Vision-Systeme, welche dazu genutzt werden, um intelligente Systeme zu schaffen und Anwender solcher Applikationen zu unterstützen. Insbesondere bei der Überwachung von Räumen, Flächen, Arbeitsgeräten und der gleichen können derartige System hilfreich sein.

Es bestehen bereits spezialisierte Systeme, welche beispielsweise darauf ausgelegt sind, bestimmte Eigenschaften in Bildern, z.B. das Vorhandensein von bestimmten Objekten, zu erkennen. Diese Systeme sind jedoch oftmals unflexibel und im Umgang komplex. Beispielsweise sind diese Systeme auf die Erkennung oder Klassifizierung von Objekten eingeschränkt, ohne weitere komplexere Aufgaben lösen zu können. Darüber hinaus erfordern die Systeme oftmals einen Benutzer, welcher eine technische Ausbildung besitzt, um die Systeme integrieren, anpassen und nutzen zu können.

Es ist somit eine Aufgabe der Erfindung ein verbessertes System sowie Verfahren zur Unterstützung eines Anwenders in einem Industrieumfeld bereitzustellen.

Diese Aufgabe wird durch die Gegenstände der unabhängigen Ansprüche gelöst.

Die Erfindung betrifft ein System, insbesondere Sicherheitssystem oder Sicherheitsassistenzsystem, bevorzugt zur Steuerung einer industriellen Maschine oder einer Anwendung im Industrieumfeld, zur Unterstützung eines Benutzers bei der Auswertung von Bilddaten, umfassend:
zumindest einen Bildgebungssensor zur Erfassung einer Umgebung und Erzeugung von zugehörigen Bilddaten,
eine Datenverarbeitungseinheit, welche zumindest ein KI-Modell mit Zero-Shot-Fähigkeit zur Verarbeitung der Bilddaten umfasst,
und eine Benutzerschnittstelle zur Eingabe einer Benutzeranfrage in natürlicher Sprache,
wobei das KI-Modell ausgebildet ist, basierend auf den Bilddaten und der Benutzeranfrage eine Ausgabeinformation als Antwort auf die Benutzeranfrage, insbesondere in Echtzeit, auszugeben und
wobei die Datenverarbeitungseinheit ausgebildet ist, basierend auf der Ausgabeinformation eine Antwortaktion auszulösen. Die Antwortaktion kann bevorzugt eine Aktion einer industriellen Maschine oder einer Anwendung im Industrieumfeld bewirken, beispielsweise das Ansteuern eines Aktors der industriellen Maschine.

Die Erfindung baut auf der Erkenntnis auf, dass basierend auf einem Zero-Shot-fähigen KI-Modell eine Vielzahl von unterschiedlichen Benutzeranfragen verarbeitet werden können, ohne vorher beispielsweise auf einen spezifischen Aufgabenbereich beschränkt worden zu sein. Der Benutzer des Systems kann über die Benutzerschnittstelle eine beliebige Benutzeranfrage eingeben, welche sich auf die von dem Bildgebungssensor erfasste Umgebung bezieht. Das KI-Modell erhält die Bilddaten sowie die Benutzeranfrage als Input und gibt eine Ausgabeinformation als Output aus. Die Ausgabeinformation kann beispielsweise eine Textantwort auf die Benutzeranfrage, insbesondere in natürlicher Sprache, sein. Basierend auf der Ausgabeinformation kann das System anschließend eine geeignete Antwortreaktion auslösen. Die Antwortaktion kann jede beliebige, insbesondere in der realen Welt wahrnehmbare, Aktion umfassen.

Unter einer Zero-Shot-Fähigkeit bzw. Zero-Shot-Performance wird in diesem Zusammenhang verstanden, dass das KI-Modell Kontextwissen verwendet, beispielsweise um implizite Eigenschaften in den Bilddaten abzufragen oder zu identifizieren. Anders ausgedrückt, ist das KI-Modell insbesondere in der Lage, eine Aufgabe auszuführen, für die es während des Trainings keine expliziten Beispiele gesehen hat. Das KI-Modell nutzt beispielsweise sein Verständnis des Kontexts und seiner eigenen internen Repräsentationen, um Rückschlüsse auf gewünschte und/oder angefragte Eigenschaften zu ziehen. Das erfindungsgemäße System bietet den Vorteil, dass es flexibel und anpassungsfähig ist und insbesondere mit geringem Aufwand auf neue Aufgaben oder Fragestellungen angewendet werden kann. Insbesondere kann das KI-Modell unterschiedliche Typen von Benutzeranfragen verarbeiten, welche in einem späteren Abschnitt näher erläutert sind.

Wie vorab beschrieben, umfasst das System eine Benutzerschnittstelle, insbesondere eine graphische Benutzeroberfläche (GUI), über die ein Benutzer jeweilige Benutzeranfragen, insbesondere Fragen zu der von dem Bildgebungssensor erfassten Umgebung, in natürlicher Sprache eingeben kann. Die Benutzerschnittstelle ist somit insbesondere als "No-Code"-Benutzerschnittstelle ausgebildet, d.h. ein Benutzer benötigt keine Programmierkenntnisse, um mit dem System zu interagieren und Benutzeranfragen zu stellen. Da das System in der Lage ist, die Benutzeranfragen in natürlicher Sprache zu verarbeiten, wird die Bedienung für den Benutzer deutlich vereinfacht. Insbesondere können Benutzeranfragen verarbeitet werden, welche in vergleichbaren Systemen des Stands der Technik nur durch eine aufwändige Anpassung des Bildverarbeitungssystems möglich wären, welche meistens Personal mit entsprechender technischer Ausbildung erfordern. Dies ermöglicht dem Benutzer eine breitere Auswahl an Fragestellungen und damit einen verbesserten und erhöhten Informationsaustausch.

Fragestellungen wie beispielsweise "Sind die Linien auf dem Boden noch klar zu erkennen?" oder "Muss in diesem Bereich geputzt werden?" oder "Trägt diese Person einen Schutzhelm?" können von dem System verarbeitet und beantwortet werden, ohne dass eine spezifische Anpassung eines Algorithmus an die jeweilige Fragestellung und/oder an die hierfür relevanten Merkmale in den Bilddaten notwendig ist. Vielmehr ist das KI-Modell ausgebildet, auf Basis der ihm zugrundeliegenden Kontextinformationen, d.h. durch die Verwendung eines Zero-Shot-fähigen KI-Modells, die Fragestellungen zu beantworten. Durch die Möglichkeit, eine beliebige Fragestellung in Bezug auf die Bilddaten in natürlicher Sprache zu stellen, wird somit insbesondere die Zeit, welche normalerweise für die Implementierung der mit einer Fragestellung verbundenen Funktion benötigt wird, minimiert. Es ermöglicht dem Benutzer des Systems in beliebig kurzen zeitlichen Abständen neue Benutzeranfragen hinsichtlich der Informationen der Bilddaten zu formulieren. Insbesondere findet ein kontinuierlicher Austausch mit dem Benutzer in bidirektionaler Kommunikation in Echtzeit und natürlicher Sprache statt, sodass Benutzeranfragen entsprechend den Antworten angepasst und/oder spezifiziert werden können. Durch die sofortige Rückmeldung an den Benutzer können Anfragen verbessert und die Ergebnisqualität erhöht werden. Außerdem ist eine Anpassung des KI-Modells an neue Benutzeranforderungen jederzeit möglich, beispielsweise indem die Ausgaben des KI-Modells durch den Benutzer validiert werden und das KI-Modell basierend auf den validierten Ausgaben im Hinblick auf die Benutzeranforderung optimiert wird. Dies kann insbesondere ohne Programmierkenntnisse des Benutzers erfolgen.

Wie bereits angedeutet sind die Benutzeranfragen in der Regel ortsbezogene Anfragen und umfassen bevorzugt zumindest indirekt oder direkt eine ortsbezogene Information. Eine ortsbezogene Anfrage ist beispielsweise eine Anfrage, bei welcher der zu erwartende Inhalt des Bildes bekannt ist. Bei stationär angebrachten Bildgebungssensoren sind die Ortsinformationen beispielsweise konstant. Wenn das System beispielsweise nur einen Bildgebungssensor umfasst, ist der Ort, auf den sich die Anfrage bezieht, insbesondere durch die Position und/oder Ausrichtung des Bildgebungssensors festgelegt. Der Ort kann aber auch direkt vom Nutzer über eine Koordinateneingabe oder durch die Angabe einer Ortsinformation in der Benutzeranfrage angegeben werden oder anhand eines Beispielbildes extrahiert werden. Umfasst das System beispielsweise eine Vielzahl von Bildgebungssensoren, welche insbesondere an unterschiedlichen Orten angebracht sind und/oder unterschiedliche Umgebungen oder Bereiche der Umgebung erfassen, so kann basierend auf der von dem Benutzer angegebenen ortsbezogenen Information ein Bildgebungssensor ausgewählt werden, dessen Bilddaten zur Verarbeitung des Benutzeranfrage verwendet werden. Informationen über die Ausrichtung und/oder die globale Position des Bildgebungssensors können über MEMS-Inertial Sensoren, z.B. Beschleunigungssensoren, Drehratensensoren und/oder Magnetfeldsensoren, detektiert werden.

Die Benutzerschnittstelle bzw. Benutzeroberfläche kann insbesondere Eingabemittel zur Eingabe der Benutzeranfrage, z.B. eine Tastatur, einen Touchscreen und/oder ein Mikrofon, und/oder Ausgabemittel zur Ausgabe der Ausgabeinformation, z.B. eine Anzeigeeinheit (Display), einen Lautsprecher und/oder eine Signalleuchte, umfassen.

Der Bildgebungssensor kann insbesondere eine 2D-Kamera, z.B. eine RGB-Kamera, eine Monochromkamera oder eine IR-Kamera, eine 3D-Kamera, z.B. bestehend aus mehreren Stereokameras oder eine TOF-Kamera, und/oder einen LI-DAR-Sensor oder Laserscanner zur Erfassung der Umgebung umfassen. Ferner kann das Systeme mehrere Bildgebungssensoren umfassen. Beispielsweise kann das auf der Datenverarbeitungseinheit implementierte KI-Modell ausgebildet sein, die Ausgabeinformation basierend auf den Bilddaten einem der Vielzahl von Bildgebungssensoren oder basierend auf den Bilddaten mehrerer der Vielzahl von Bildgebungssensoren zu erzeugen. Die Umgebung kann je nach Anwendungsgebiet eine Lagerhalle, ein Lagerraum, ein vorgegebener Überwachungsbereich innerhalb eines Raums und dergleichen sein. Der von dem Bildgebungssensor erfasste Bereich der Umgebung kann sich insbesondere über die Zeit verändern, beispielsweise indem sich die Position und/oder Ausrichtung des Bildgebungssensors verändert.

Bevor die jeweiligen Bilddaten, die Benutzeranfrage bzw. die der Benutzeranfrage zugehörigen Benutzeranfragedaten und/oder die in einem späteren Abschnitt beschriebenen Sensordaten von dem KI-Modell verarbeitet werden, können die jeweiligen Daten vorverarbeitet werden, um sie in eine für das KI-Modell verarbeitbare Form zu bringen. Die Vorverarbeitung kann beispielsweise zumindest einen der folgenden Schritte umfassen: Bereinigung, Normalisierung, Skalierung, Merkmalsextraktion, Kodierung, Augmentation oder Formatumwandung. Die Datenverarbeitungseinheit ist insbesondere über eine jeweilige Datenverbindung mit dem Bildgebungssensor und der Benutzerschnittstelle verbunden. Die Übertragung zwischen dem Bildgebungssensor und der Datenverarbeitungseinheit erfolgt insbesondere serialisiert (serielle Kommunikation), beispielsweise via Ethernet. Die Übertragung kann über ein beliebiges Bussysteme (Feldbusse) und/oder ein beliebiges Netzwerkprotokoll erfolgen, insbesondere können Technologien wie USB, Ethernet und/oder GigEVision verwendet werden.

Das System eignet sich insbesondere zur Anwendung in einem Industrieumfeld, beispielsweise in einer Smart Factory. Beispielsweise kann es sich bei dem System um ein System zur Ermittlung eines Lagerbestands, ein System zur Ermittlung des Zustandes einer Lagerhalle, ein System zur Ermittlung von Gefährdungen, z.B. in einer Lagerhalle, und dergleichen handeln. Das System kann also dazu eingesetzt werden, eine Überprüfung und/oder Überwachung der erfassten Umgebung oder eines vorgegebenen Überwachungsbereichs in der Umgebung zu gewährleisten und damit eine erhöhte Sicherheit in dem entsprechenden Anwendungsbereich zu erzielen. Vorzugsweise wird das System als Sicherheitssystem in der Logistikautomation oder der Fabrikautomation eingesetzt. Entsprechend können die Benutzeranfragen insbesondere sicherheitsbezogene bzw. sicherheitsrelevante Eingaben und/oder Fragen umfassen. Beispielhafte Benutzeranfragen sind:
- Tragen die Mitarbeiter die vorgeschriebenen Helme, Sicherheitswesten oder Sicherheitsschuhe?
- Sind die Regale ordnungsgemäß und sicher eingeräumt?
- Befinden sich Stolperfallen auf dem Weg?
- Befinden sich Gegenstände (z.B. Kanister) im Bereich, die hier nicht stehen dürfen?
- Sind offene Kabelenden im Bereich zu erkennen?
- Sind die bestimmte Sicherheitseinrichtungen aktiv? Ist z.B. die Tür zur Roboterzelle geschlossen?

Weitere Ausführungsformen der Erfindung sind der Beschreibung, den Unteransprüchen und den Zeichnungen zu entnehmen.

Gemäß einer ersten Ausführungsform ist das KI-Modell basierend auf Trainingsbilddaten und zugehörigen Trainingsausgabeinformationen trainiert, insbesondere wobei die Trainingsbilddaten auf der erfassten Umgebung basieren. Das KI-Modell ist also durch ein Trainingsverfahren auf die Beantwortung von Benutzeranfragen zu der durch den Bildgebungssensor erfassten Umgebung optimiert. Dazu wird das Modell insbesondere mit Trainingsbilddaten und den zugehörigen Trainingsausgabeinformationen trainiert. Die Trainingsbilddaten können visuelle Informationen darstellen, die beispielsweise zur Erkennung relevanter Merkmale und Muster in der Umgebung genutzt werden. Die zugehörigen Trainingsausgabeinformationen enthalten die erwarteten Antworten und/oder Klassifikationen für die jeweiligen Trainingsbilder, sodass das Modell insbesondere durch überwachtes Lernen auf die spätere Anwendung vorbereitet wird.

In einer bevorzugten Ausführungsform werden die Trainingsbilddaten basierend auf der Umgebung erzeugt, welche bei dem Einsatz des Systems von dem Bildgebungssensor erfasst wird. Dies bedeutet, dass die Trainingsbilder entweder direkt in der Zielumgebung aufgenommen oder synthetisch generiert werden können, um typische Szenarien dieser Umgebung nachzubilden. Dadurch kann das Modell gezielt auf die spezifischen Bedingungen der erfassten Umgebung bzw. des erfassten Bereichs abgestimmt werden, was die Genauigkeit und Zuverlässigkeit der Antworten verbessert.

Die Erzeugung der Trainingsbilddaten kann beispielsweise zumindest einen der folgenden Schritte umfassen:
- Erfassung realer Bilddaten durch Bildgebungssensoren oder anderen Sensoren im erfassten Bereich
- Simulation und synthetische Datengenerierung, bei der Umgebungsbedingungen, Lichtverhältnisse oder Objekte variabel nachgebildet werden
- Erweiterung des Trainingsdatensatzes durch Verfahren wie Datenaugmentation, um Variationen in Perspektive, Beleuchtung oder Objektposition zu berücksichtigen.

Durch die Verwendung umgebungsspezifischer Trainingsdaten kann das KI-Modell auf typische Szenarien und potenzielle Anomalien der überwachten Umgebung besser reagieren, wodurch die Qualität der Antworten auf Benutzeranfragen optimiert wird. Die Trainingsdaten können dabei aus verschiedenen Quellen stammen:

### Bilder und Videos von Bildgebungssensoren:

Die Trainingsbilddaten können beispielsweise von einem oder mehreren Bildgebungssensoren, z.B. Kameras, aufgenommene Bilddaten umfassen, wobei die Bildgebungssensoren insbesondere an festen Punkten z.B. entlang einer Produktionslinie positioniert sind. Sie können verwendet werden, um das KI-Modell zu trainieren, Defekte zu erkennen, den Produktionsprozess zu überwachen und die Effizienz zu verbessern.

### Historische Daten:

Die Trainingsbilddaten können ferner in der Vergangenheit erfasste Bilddaten, z.B. aus früheren Produktionszyklen, umfassen, einschließlich Informationen über Ausfallzeiten, Defekte und Wartungsprotokolle.

### Daten von Sensoren:

Ferner können die Trainingsbilddaten Sensordaten von weiteren Sensoren umfassen, welche nachfolgend näher beschrieben sind.

Gemäß einer Ausführungsform umfasst das System ferner zumindest einen weiteren Sensor, wobei das KI-Modell ferner ausgebildet ist, die Ausgabeinformation zusätzlich basierend auf Sensordaten des weiteren Sensors auszugeben. Hierzu wurde das KI-Modell beispielsweise zusätzlich mit entsprechenden Trainingssensordaten trainiert. Als weiterer Sensor kann beispielsweise ein Temperatur-, Druck-, Feuchtigkeits-, Geschwindigkeits-, Beschleunigungs- und/oder Vibrationssensor verwendet werden. Basierend auf den Sensordaten kann beispielsweise der Zustand der Umgebung oder der Zustand von Objekten, z.B. Maschinen, innerhalb der Umgebung ermittelt werden. In einer Smart Factory könnten beispielsweise verschiedene Arten von Sensoren zur Überwachung der Maschinen eingesetzt werden. Die Sensoren können dabei kontinuierlich Daten, insbesondere in Echtzeit, erfassen und beispielsweise an eine zentrale Datenbank senden. Die Sensordaten werden insbesondere in eine für das KI-Modell verarbeitbare Form gebracht, damit das KI-Modell effektiv damit trainiert werden kann.

Gemäß einer Ausführungsform ist der Bildgebungssensor, die Datenverarbeitungseinheit und/oder der weitere Sensor auf einem autonomen Fahrzeug montiert. Beispielsweise ist die der Bildgebungssensor auf einem Automated Guided Vehicle (AGV) oder einem Autonomous Mobile Robot (AMR) befestigt. Das autonome Fahrzeug kann beispielsweise die Umgebung mittels des Bildgebungssensors erfassen und sich innerhalb der Umgebung fortbewegen. Beispielsweise kann das autonome Fahrzeug in Fabriken eingesetzt werden, um eine Vielzahl von Aufgaben zu erfüllen, wie z.B. die Überwachung von Lagerbeständen oder die Erkennung von Hindernissen. Mittels des autonomen Fahrzeugs können unterschiedliche Bereiche der Umgebung erfasst und/oder überwacht werden. Die Benutzerschnittstelle kann insbesondere an einem anderen Ort als der Bildgebungssensor bzw. das autonome Fahrzeug positioniert sein. Der Benutzer des Systems kann beispielsweise von einem festen Standort aus, an dem die Benutzerschnittstelle lokalisiert ist, durch eine jeweilige Benutzeranfrage Informationen über den von dem Bildgebungssensor erfassten fernliegenden Bereich erlangen. Grundsätzlich ist es auch denkbar, dass das Fahrzeug ein von dem Benutzer beispielsweise per Fernsteuerung steuerbares Fahrzeug ist. In diesem Fall kann der Benutzer selbst festlegen, welcher Bereich der Umgebung von dem Bildgebungssensor erfasst wird.

Gemäß einer Ausführungsform umfasst die Datenverarbeitungseinheit einen Programmable Logic Controller (PLC). Derartige PLCs werden bereits in vielen Industrieplattformen eingesetzt, sodass die Implementierung des KI-Modells auf einer solchen Plattform auf einfache Weise erfolgen kann, ohne kostenintensive Hardwareanpassungen vornehmen zu müssen. Insbesondere sind keine aufwändigen Anpassungen an die spezifischen Anforderungen und Ressourcen der jeweiligen Systeme notwendig. Die lokale Anwendung auf der PLC bietet darüber hinaus erhebliche Datenschutzvorteile. Da die Datenverarbeitung direkt auf der PLC stattfinden kann, werden die persönliche Daten nicht an externe Server gesendet. Dies minimiert das Risiko von Datenlecks und erleichtert die Einhaltung von Datenschutzbestimmungen.

Gemäß einer Ausführungsform umfasst die Benutzerschnittstelle eine Anzeigeeinheit und ist dazu ausgebildet, in Folge einer Benutzeranfrage Beispielbilddaten sowie zugehörige Beispielausgabeinformationen des KI-Modells auf der Anzeigeeinheit anzuzeigen, wobei basierend auf einer Evaluierung der Beispielsausgabeinformationen durch den Benutzer das KI-Modell optimiert wird. Beispielsweise überprüft der Benutzer anhand der Beispielbilddaten und der Beispielausgabeinformationen, ob das KI-Modell eine zugehörige Benutzeranfrage korrekt bzw. zufriedenstellend beantwortet. Die angezeigten Beispielbilddaten umfassen insbesondere Bilddaten, welche in einem internen, verschlüsselten Speicher der Datenverarbeitungseinheit, z.B. des PLCs, zu diesem Zweck abgelegt sind. Beispielsweise werden bei einer ortsbezogenen Anfrage wie "Sind noch Paletten vorhanden?" eine Vielzahl von Bildern mit entsprechender Auswertung aufgerufen und die Ausgabe des KI-Modells und/oder die ausgelöste Antwortreaktion vom Kunden als "korrekt/falsch" markiert. Durch aktives Lernen, indem beispielsweise für das KI-Modell relevante Samples automatisiert vorgeschlagen werden, kann die Robustheit der Ausgabe des KI-Modells weiter verbessert werden.

Gemäß einer Ausführungsform umfasst die Antwortaktion zumindest eine der folgenden Aktionen: Anzeigen der Ausgabeinformation auf der Anzeigeeinheit der Benutzerschnittstelle, Speichern der Bilddaten, der Benutzeranfrage und/oder der Ausgabeinformation in einer Datenbank, Erzeugen und Übermitteln einer Nachricht an ein externes Gerät, Durchführung einer Sicherheitsaktion durch eine Maschine oder Ausgabe eines akustischen und/oder visuellen Signals. Über die auf der Anzeigeeinheit dargestellte Antwort des KI-Modells erhält der Benutzer somit insbesondere eine Antwort in Textform in natürlicher Sprache. Zusätzlich oder alternativ kann die Antwort als Audiosignal in gesprochener Form ausgegeben werden. Die Ausgaben des KI-Modells können in einer Datenbank gespeichert werden, um Trends zu analysieren oder historische Daten für Audits bereitzustellen. Die Antworten könnten ferner an bestehende Systeme übermittelt und darin integriert werden, um z.B. Prozesse wie Bestandsmanagement oder Qualitätskontrolle zu unterstützen. Ferner können basierend auf den Ausgabeinformationen des KI-Modells Benachrichtigungen auf Smartphones, Tablets oder Produktionsdashboards gesendet werden, falls bestimmte, insbesondere vordefinierte, Ereignisse eintreten. Beispielsweise kann bei der Abfrage eines Lagerbestands eine Benachrichtigung an ein Smartphone gesendet werden, über das ein zuständiger Mitarbeiter informiert wird, wenn z.B. ein Mangel an Ware in einem Lager vorliegt. Die Antwortaktion kann ferner die automatisierte Erstellung und Aussendung von entsprechenden Benachrichtigungsemails umfassen. Grundsätzlich können aber auch in Reaktion auf die Ausgabeinformation andere Aktionen, insbesondere automatisiert, ausgelöst werden, wie z.B. das Starten eines Wartungsprozesses oder das in Auftrag geben einer Reinigung. Die Antwortaktionen umfassen insbesondere sicherheitsgerichtete Aktionen, beispielsweise das Stoppen von Geräten in der Umgebung, die Ausgabe eines akustischen und/oder visuellen Warnsignals und/oder die Ausgabe von Sicherheitsnachrichten an externe Geräte.

Gemäß einer Ausführungsform ist die Antwortaktion über die Benutzerschnittstelle vom Benutzer auswählbar. Beispielsweise werden dem Benutzer über die Anzeigeeinheit der Benutzerschnittstelle mögliche Antwortaktionen angezeigt, von denen er zumindest eine auswählen kann, welche anschließend ausgeführt wird. In manchen Fällen können beispielsweise bestimmte Antwortaktionen im vordergründigen Interesse des Benutzers liegen, da sie beispielsweise sicherheitsrelevant sind, während hingegen andere Antwortaktionen für den Benutzer irrelevant sein können. Das System ist somit flexibel im Hinblick auf die jeweils vorliegenden Anforderungen und/oder Wünsche eines Benutzers.

Gemäß einer Ausführungsform sind die Bilddaten und/oder die Trainingsbilddaten verschlüsselt und/oder anonymisiert. Insbesondere sind die Bilddaten und/oder Trainingsbilddaten in einem internen Speicher des PLCs hinterlegt. Die jeweiligen Bilddaten könnten beispielhaft mit einer Frequenz von 1 Hz über einen Zeitraum von 48 Stunden erfasst und geloggt werden. Insbesondere wird bei der Erfassung und Verarbeitung der Bilddaten und/oder Trainingsbilddaten eine strenge Anonymisierung durchgeführt, um sicherzustellen, dass keine Informationen von natürlichen Personen erfasst oder gespeichert werden. Die erfassten Daten werden insbesondere gemäß den geltenden Datenschutzgesetzen und -bestimmungen behandelt. Das System kann darüber hinaus eine Überwachungseinheit umfassen, die, insbesondere automatisiert, eine kontinuierliche Überwachung und Überprüfung der Ausgaben des KI-Modells auf Datenschutzverletzungen und/oder ethische Richtlinien durchführt. Die vorstehenden Ausführungen gelten in gleicher Weise für die Sensordaten und/oder die Trainingssensordaten.

Gemäß einer Ausführungsform ist das System ausgebildet, zumindest eine der folgenden Arten von Benutzeranfragen zu verarbeiten: Zustandsanfragen, Verlaufsanfragen, Anomalieerkennungsanfragen, konditionelle Anfragen oder eine Kombination davon. Die eingegebenen Benutzeranfragen können demnach unterschiedliche Formen annehmen und verschiedene Aspekte des von dem Bildgebungssensor erfassten Bereichs betreffen. Die unterschiedlichen Arten von Benutzeranfragen sind beispielsweise wie folgt gekennzeichnet:

### Zustandsanfragen:

Diese Art von Anfrage bezieht sich beispielsweise auf den aktuellen Zustand des erfassten Bereichs. Beispiele hierfür sind Fragen wie "Ist eine Person in dem Bereich?" oder "Wie viele Paletten sind noch in Raum X?".

### Verlaufsanfragen:

Diese Anfragen betreffen beispielsweise vergangene Ereignisse oder Zustandsänderungen im erfassten Bereich. Dazu zählen Fragen wie "Kam in den letzten 24 Stunden Ereignis X vor?" oder "Hat sich die Anzahl der Paletten im Raum X in den letzten 2 Stunden verändert?".

### Anomalieerkennungsanfragen:

Solche Anfragen beziehen sich beispielsweise auf die Identifikation ungewöhnlicher Ereignisse oder Abweichungen von erwarteten Mustern. Beispielsweise kann ein Benutzer fragen "Wurde in den letzten 12 Stunden eine ungewöhnliche Aktivität festgestellt?".

### Konditionelle Anfragen:

Diese Anfragen dienen insbesondere dazu, bestimmte Aktionen oder Maßnahmen basierend auf den erfassten Bilddaten durchzuführen oder auszulösen. Beispielsweise kann ein Benutzer neben direkten Abfragen zum Zustand des erfassten Bereichs eine konditionelle Anfrage stellen, welche eine Bedingung enthält, die erfüllt sein muss, damit eine bestimmte Information bereitgestellt und/oder eine Aktion ausgelöst wird. Die Bedingung kann sich auf eine einzelne Variable oder eine Kombination mehrerer Faktoren beziehen. Beispiele hierfür sind "Sende eine Warnung an X, wenn eine Bewegung erkannt wird" oder "Wenn ein Tier in der Halle ist, überprüfe ob du eine offene Türe siehst".

Gemäß einer Ausführungsform umfassen die Bilddaten Sequenzen von Bildern. Mit anderen Worten kann es sich bei den Bilddaten um Videobilddaten handeln. Der Benutzer kann in einem solchen Fall beispielsweise festlegen, welche Merkmale im Video betrachtet werden sollen. Hierzu kann der Benutzer beispielsweise einen Bereich oder ein Objekt innerhalb des erfassten Bildes auswählen, wobei diese Information dem KI-Modell, insbesondere in einer für das KI-Modell verarbeitbaren Form, zur Verfügung gestellt wird. Der Vorteil dieser Funktion liegt in der Fähigkeit, detaillierte Einblicke in Arbeitsabläufe zu gewinnen, die sonst schwer zu messen wären. Ein Anwendungsfall wären Fragen wie "Wie lange dauert es, bis der Arbeitsschritt abgeschlossen ist?" oder "Wie oft wird dieses Werkzeug während einer Schicht verwendet?". Ein weiteres Beispiel wäre die Überwachung von Verkehrsflüssen in einem Logistikzentrum. Durch die Analyse von Videos können Geschwindigkeiten von Warentransporten gemessen und optimale Ankunftszeiten berechnet werden. Der Vorteil liegt insbesondere in der präzisen Datenerfassung und der Möglichkeit, Verkehrsströme effizienter zu gestalten.

Gemäß einer Ausführungsform ist die Benutzerschnittstelle ausgebildet, Benutzeranfragen in Form von Spracheingaben zu empfangen. Beispielsweise umfasst die Benutzerschnittstelle hierfür ein Mikrofon, über das die Spracheingabe des Benutzers empfangen und verarbeitet werden kann. Durch die Möglichkeit der Spracheingabe ergibt sich für den Benutzer ein noch intuitiveres und benutzerfreundlicheres Erlebnis, wodurch die Nutzung von zeitintensiven Eingabemitteln, z.B. einer Eingabetastatur, verringert werden kann. Die Benutzerschnittstelle kann hierzu beispielsweise eine Speech-to-Text-Engine umfassen, welche die Spracheingabe in eine Textform umwandelt, welche anschließend von dem KI-Modell verarbeitbar ist.

Gemäß einer Ausführungsform umfasst die Datenverarbeitungseinheit eine Cloud, auf der das KI-Modell, zumindest zum Teil, implementiert ist. Das KI-Modell kann beispielsweise aus Effizienzgründen innerhalb einer Cloud ausgeführt werden, wobei die Datenverarbeitungseinheit weiterhin eine physische Verarbeitungseinheit umfassen kann, welche die empfangenen Bilddaten und die Benutzeranfragedaten über eine, vorzugsweise drahtlose, Datenverbindung an die Cloud übermittelt, in der das KI-Modell ausgeführt wird. Die Ausgabeinformationen des KI-Modells können anschließend über die Datenverbindung an die physische Verarbeitungseinheit der Datenverarbeitungseinheit übermittelt werden. Die Ausführung des KI-Modells in einer Cloud bietet eine Vielzahl von Vorteilen:
Skalierbarkeit: Cloud-Systeme bieten eine hohe Skalierbarkeit, da die Komplexität und/oder Größe des KI-Modells an sich verändernde Anforderungen auf einfache Weise angepasst werden kann. Wenn beispielsweise die Menge der zu verarbeitenden Bilder steigt, kann die Cloud-Infrastruktur leicht skaliert werden, um diese zusätzliche Last zu bewältigen. Insbesondere können bestehende KI-Modelle auf einfache Weise durch verbesserte KI-Modelle ersetzt werden. Da die neuere KI-Modelle oftmals genauer und effizienter sind als ältere Modelle, kann die Leistung der Bildverarbeitung verbessert werden.

Schwarmintelligenz: Durch die Nutzung der Cloud kann eine Form von Schwarmintelligenz genutzt werden, um komplexe Probleme zu lösen. Beispielsweise können mehrere Bildverarbeitungssysteme, d.h. KI-Modelle, zusammenarbeiten und ihre Ergebnisse teilen, um genauere und robustere Auswertungen zu liefern. Beispielsweise kann eine Benutzeranfrage auf Basis einer sich zeitlich überschneidenden Ereigniskette formuliert werden: "Falls AGV 1 an Ort A sieht, dass kein Material mehr vorhanden ist und AGV 2 an Ort B ebenso, veranlasse, dass AGV 3 einen Umweg fährt um Material abzuholen und an die Orte A und B zu transportieren."

Ressourceneffizienz: Cloud-Systeme können oft ressourceneffizienter sein als lokale Systeme, insbesondere wenn es um die Verarbeitung großer Mengen von Daten geht. Somit kann auf zusätzliche teure Hardware verzichtet werden und stattdessen auf die Ressourcen der Cloud zugegriffen werden, insbesondere nur, wenn sie benötigt werden.

Gemäß einer Ausführungsform umfasst die Datenverarbeitungseinheit ein Embedded Device, auf der das KI-Modell, zumindest zum Teil, implementiert ist. Das Embedded Device kann beispielsweise eine PLC des Systems bzw. Sicherheitssystems oder der industriellen Maschine sein. Das auf dem Embedded Device implementierte KI-Modell kann beispielsweise ein Small Vision Language Model umfassen. Solche Small Vision Language Modelle können wenig Rechenleistung benötigen, so dass sie auf dem Embedded Device lauffähig sein können.

Gemäß einer Ausführungsform umfasst das KI-Modell ein Large-Language-Modell (LLM), ein Large-Action-Model (LAM), ein Agentic System und/oder ein Large-Vision-Modell (LVM). Das KI-Modell umfasst insbesondere eine Kombination der vorstehenden Modelle und kann damit ein multimodales KI-Modell sein, welches sowohl Text- als auch Bilddaten verarbeitet und insbesondere Aktionen ausführen bzw. auslösen kann. Das KI-Modell ist also insbesondere ein generatives und/oder prädiktives neuronales Netz. Das neuronale Netz kann insbesondere ein auf der Transformer-Technologie basierendes neuronales Netz und/oder ein LSTM-Netz, insbesondere xLSTM-Netz (extended LSTM), sein. Das LAM kann als ein neurosymbolisches KI-Modell realisiert sein. Durch die Verwendung eines LAMs kann der Benutzer nicht nur Fragen zu den Inhalten der erfassten Bilder, sondern auch konkrete Handlungsspielräume in seinen Anfragen angeben. Beispielsweise kann das System folgende Benutzeranfrage verarbeiten: "Sorge für eine möglichst kosteneffiziente Auslastung der AGV-Flotte, basierend auf den Materialmengen in Lagerregal A an Ort XYZ."

Das Agentic System kann mehrere, insbesondere autonome, Agenten umfassen, die miteinander kooperieren. Diese Agenten tauschen Informationen aus, koordinieren ihre Aktionen und passen ihre Strategien dynamisch an. Die Zusammenarbeit kann dezentral organisiert sein, wobei jeder Agent lokal Entscheidungen trifft, oder zentral gesteuert werden, wenn eine übergeordnete Instanz die Aufgaben verteilt.

Als Beispiel kann das KI-Modell konkret eine Kombination aus einem Vision Transformer (ViT) und einem Large Language Model (LLM) umfassen. Für die visuelle Verarbeitung insbesondere der empfangenen Bilddaten kann ein sogenanntes Backbone genutzt werden, welches den Vision Transformer (ViT) oder ein vergleichbares Modell umfasst, welche Merkmale aus Bildern extrahieren. Als Ausgabe des Backbones kann die Bildrepräsentationen als Token an das Sprachmodell bzw. LLM weitergegeben werden.

Als Sprachmodell bzw. LLM kann das KI-Modell ein (leistungsfähiges) vortrainiertes Sprachmodell, z.B. LLaMA oder GPT-ähnliche Architekturen umfassen. Dieses Modell verarbeitet sowohl die extrahierten visuellen Merkmale als auch den textuellen Kontext.

Das KI-Modell kann eine multimodale Fusion umfassen, bei welcher in einer Projektionsschicht die visuellen Merkmale mit der Sprachmodell-Repräsentation verbunden wird. Dadurch kann das KI-Modell Text- und Bildinformationen gleichzeitig nutzen.

Die Erfindung betrifft auch ein Verfahren, insbesondere Sicherheitsverfahren, bevorzugt zur Steuerung einer industriellen Maschine oder einer Anwendung im Industrieumfeld, zur Unterstützung eines Benutzers bei der Auswertung von Bilddaten, welches umfasst, dass:
von zumindest einem Bildgebungssensor eine Umgebung erfasst und zugehörige Bilddaten erzeugt werden,
die Bilddaten von zumindest einem KI-Modell mit Zero-Shot-Fähigkeit verarbeitet werden,
über eine Benutzerschnittstelle eine Benutzeranfrage in natürlicher Sprache eingegeben wird,
und basierend auf den Bilddaten und der Benutzeranfrage eine Ausgabeinformation als Antwort auf die Benutzeranfrage von dem KI-Modell, insbesondere in Echtzeit, ausgegeben wird und
basierend auf der Ausgabeinformation eine Antwortaktion ausgelöst wird.

Für das Verfahren gelten die Ausführungen zu dem erfindungsgemäßen System entsprechend, dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnungen dargestellt. Es zeigen:
- Fig. 1: ein System zur Unterstützung eines Benutzers bei der Auswertung von Bilddaten,
- Fig. 2: ein Ablaufdiagramm zur Veranschaulichung eines Informationsflusses in dem System,
- Fig. 3: eine Ausführungsform des Systems, bei der ein KI-Modell auf einer Cloud implementiert ist, und
- Fig. 4 bis 6: jeweilige Eingaben in eine Benutzerschnittstelle des Systems sowie zugehörige Ausgaben.

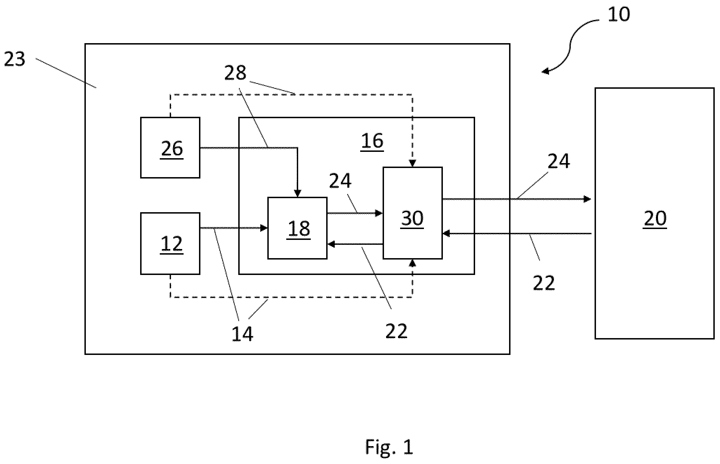

Fig. 1 zeigt ein System 10 zur Unterstützung eines Benutzers bei der Auswertung von Bilddaten. Das System 10 umfasst eine Kamera 12 zur Erfassung einer Umgebung und Erzeugung von zugehörigen Bilddaten 14, eine Datenverarbeitungseinheit 16, z.B. einen PLC, welche zumindest ein KI-Modell 18 mit Zero-Shot-Fähigkeit zur Verarbeitung der Bilddaten 14 umfasst, und eine Benutzerschnittstelle 20 zur Eingabe einer Benutzeranfrage 22 in natürlicher Sprache. Ferner umfasst das System einen Sensor 26, z.B. einen Geschwindigkeitssensor, welcher zusätzliche Sensordaten 28 hinsichtlich des AGVs 23 liefert, welche von dem KI-Modell 18 verarbeitet werden können. Die Kamera 12 und die Datenverarbeitungseinheit 16 sind Teil eines AGVs 23, welcher sich in eine Lagerhalle befindet und automatisiert fortbewegt. Das KI-Modell 16 gibt basierend auf den Bilddaten 14 und der Benutzeranfrage 22 eine Ausgabeinformation 24 als Antwort auf die Benutzeranfrage 22 insbesondere in Echtzeit aus. Basierend auf der Ausgabeinformation 24 wird eine Antwortaktion von der Datenverarbeitungseinheit 16 ausgelöst. Die Benutzerschnittstelle 20 kann insbesondere als Textkonsole ohne Bildausgabefunktion, als Webseite mit Videostream-, Texteingabe- und Textausgabefunktion oder als GUI (Graphical-User-Interface) mit Videostream-, Texteingabe- und Textausgabefunktion ausgebildet sein. Die Benutzerschnittstelle ist beispielsweise eine grafische, eine sprachbasierte, eine textbasierte und/oder eine gestenbasierte Schnittstelle.

Die Datenverarbeitungseinheit 16 umfasst ferner eine optionale Datenverbindungsschnittstelle 30, welche eine Schnittstelle zwischen dem KI-Modell 18 und der Benutzerschnittstelle 20 darstellt. Die Datenverbindungsschnittstelle 30 kann über verschiedene Implementierungsformen realisiert sein. Die Datenverbindungsschnittstelle 30 ist insbesondere als Übersetzungsschnittstelle ausgebildet, um Daten der Benutzerschnittstelle 20, der Kamera 12 und/oder des Sensors 26 in eine für das KI-Modell 18 verarbeitbare Form zu bringen und Daten des KI-Modells 16 in eine für die Benutzerschnittstelle 20 verarbeitbare Form zu bringen. Dabei kann die Datenverbindungsschnittstelle 30 folgende Funktionen aufweisen: Videoausgabe, Textausgabe und Texteingabe.

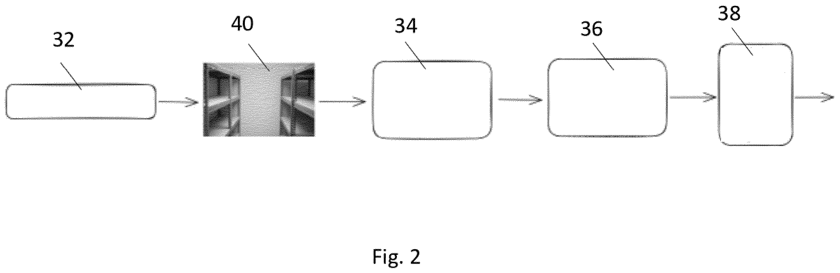

Fig. 2 zeigt ein Ablaufdiagramm zur Veranschaulichung eines Informationsflusses in dem System 10. In einem ersten Schritt 32 wird von der Kamera 12 des Systems 10 ein Bild 40 bzw. die zugehörige Bilddaten 14 erzeugt. Das vorliegende Bild 40 ist in Fig. 2 dargestellt und zeigt zwei leerstehende Regale. Der Benutzer des Systems 10 gibt anschließend in einem nächsten Schritt 34 eine Benutzeranfrage 22 über die Benutzerschnittstelle 20 in natürlicher Sprache ein, um beispielsweise zu ermitteln, ob in dem durch die Kamera 12 erfassten Bereich, d.h. in den gezeigten Regalen, Material vorhanden ist. Hierfür kann der Benutzer beispielsweise folgende Benutzeranfrage formulieren: "Ist noch Material vorhanden?". In einem weiteren Schritt 36 wird die Benutzeranfrage 22 an das KI-Modell 18 geleitet, welches basierend auf den Bilddaten 14 und der Benutzeranfrage 22 eine entsprechende Ausgabeinformation 24 erzeugt. Die Ausgabeinformation 24 ist in der Regel eine Textausgabe in natürlicher Sprache. In einem letzten Schritt 38 wird basierend auf der Ausgabeinformation 24 eine Antwortaktion von der Datenverarbeitungseinheit 16 ausgelöst. Mit anderen Worten wird basierend auf der Textausgabe des KI-Modells eine Aktion wie beispielsweise das Anzeigen der Ausgabeinformation über die Benutzerschnittstelle 20, das Erstellen und Versenden einer E-Mail an einen zuständigen Mitarbeiter, in welcher auf den aktuellen Zustand der Regale hingewiesen wird, das Einschalten einer Signalleuchte und dergleichen ausgelöst.

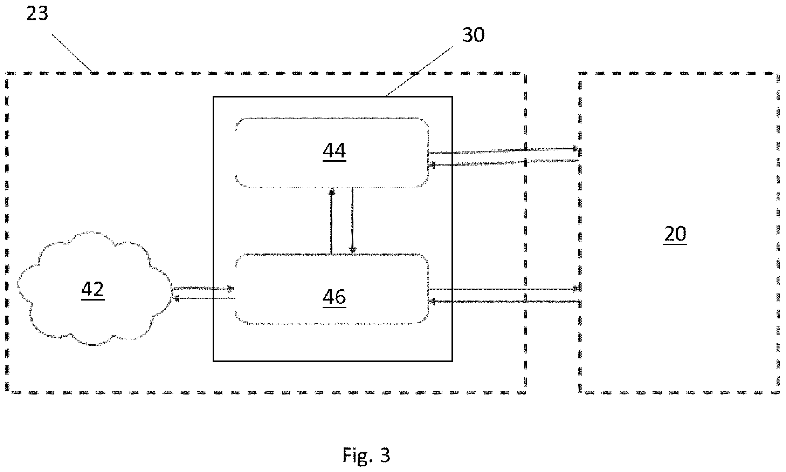

Fig. 3 veranschaulicht eine Ausführungsform des Systems 10, bei der das KI-Modell 18 auf einer Cloud 42 implementiert ist. Zur Vereinfachung wurden in Fig. 3 einige Komponenten des Systems 10 wie beispielsweise die Kamera 12 nicht dargestellt.

Vorliegend ist die Datenverbindungsschnittstelle 30 als Webserver 44 mit einer REST-API 46 bereitgestellt. Durch die Bereitstellung eines Webservers 44 auf dem AGV 23 ist eine plattformunabhängige Kommunikation möglich, sodass externe Systeme oder Benutzeranwendungen mit dem System interagieren können. Um sowohl eine direkte Webschnittstelle als auch eine maschinelle Kommunikation über API-Calls zu ermöglichen, ist die Datenverbindungsschnittstelle 30 als Kombination aus Webserver 44 und REST-API 46 ausgebildet.

Zusätzlich können über die Datenverbindungsschnittstelle 30 Lernparameter des KI-Modells 18 verwaltet werden, insbesondere im Rahmen eines Active-Learning-Prozesses. Diese Parameter können manuell oder automatisch nach dem Deployment angepasst oder zurückgemeldet werden. Zudem kann eine Synchronisation der Lernparameter zwischen mehreren autonomen Einheiten, z.B. AGVs 23, erfolgen. Dadurch ist eine kontinuierliche Optimierung des Systems auf Basis neuer Daten möglich.

Das KI-Modell 18 wird in der vorliegenden Ausführungsform auf einer Cloud 42 ausgeführt, wodurch eine erhöhte Skalierbarkeit, Flexibilität und ein effizienter Einsatz von Ressourcen ermöglicht wird. Der Datenaustausch zwischen der REST-API 46 sowie der nicht gezeigten Kamera 12 und der Cloud 42 erfolgt dabei über eine drahtlose Datenverbindung insbesondere in Echtzeit.

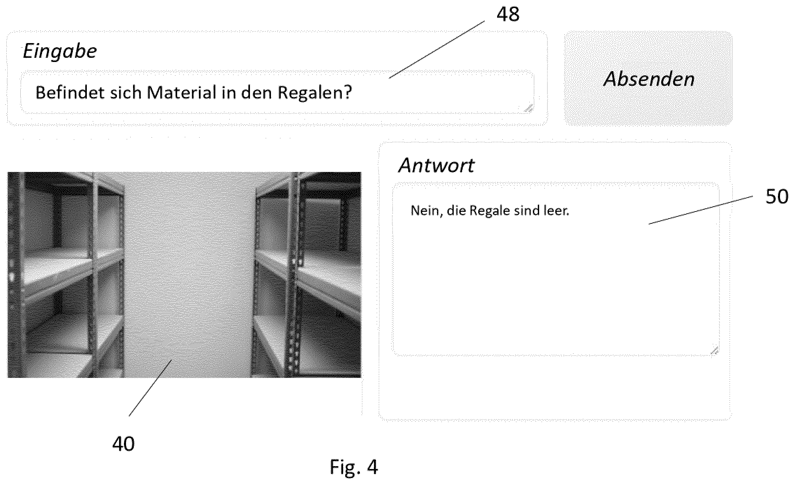

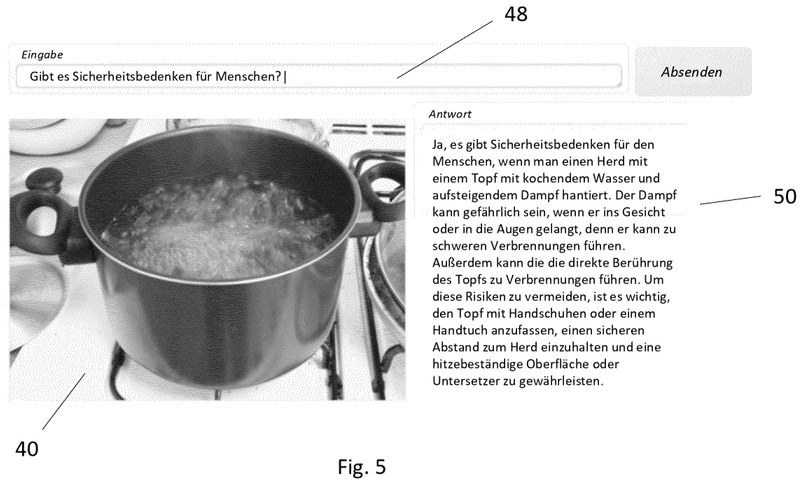

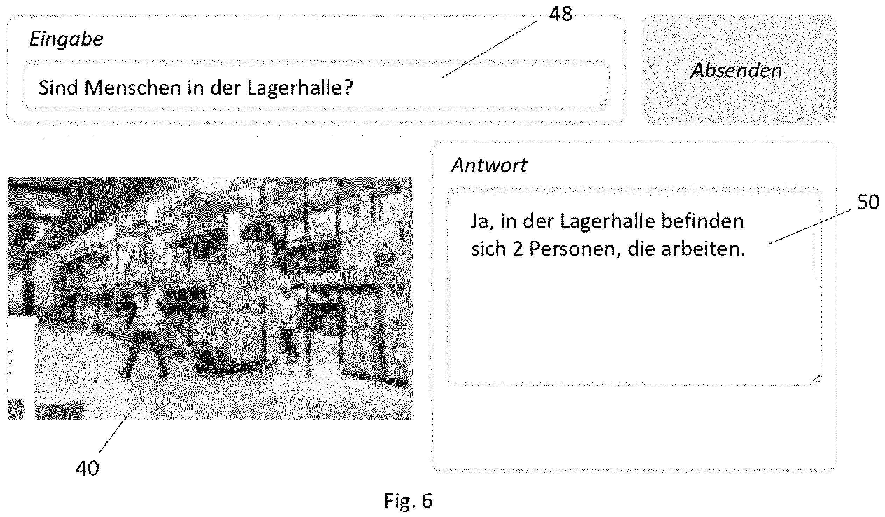

Fig. 4 bis 6 veranschaulichen jeweilige Eingaben in eine Benutzerschnittstelle 20 des Systems 10 sowie die zugehörigen Ausgaben. Die Benutzerschnittstelle 20 umfasst beispielsweise ein Benutzeroberfläche in Form eines Tablets, auf dem die in den Fig. 4 bis 6 gezeigte Darstellung angezeigt wird. Über eine Eingabekonsole 48 kann der Benutzer dabei eine beliebige Benutzeranfrage 22 stellen, welche anschießend gemeinsam mit den Bilddaten 14 der Kamera 12 von dem KI-Modell 18 verarbeitet wird, um eine Antwort auf die Benutzeranfrage 22 bereitzustellen. Die Antwort wird in einer Ausgabekonsole 50 angezeigt. Zusätzlich oder alternativ kann dem Benutzer, wie in den Fig. 4 bis 6 dargestellt, das von der Kamera 12 aktuell erfasste Bild 40 angezeigt werden, sodass der Benutzer die Ausgabe des KI-Modells 18 validieren kann.

### Bezugszeichenliste

- 10: System
- 12: Kamera
- 14: Bilddaten
- 16: Datenverarbeitungseinheit
- 18: KI-Modell
- 20: Benutzerschnittstelle
- 22: Benutzeranfrage
- 23: AGV
- 24: Ausgabeinformation
- 26: Sensor
- 28: Sensordaten
- 30: Datenverbindungsschnittstelle
- 32-38: Verfahrensschritte
- 40: Bild
- 42: Cloud
- 44: Webserver
- 46: REST-API
- 48: Eingabekonsole
- 50: Ausgabekonsole

## Patentansprüche

1. System (10), insbesondere Sicherheitssystem, zur Unterstützung eines Benutzers bei der Auswertung von Bilddaten (14), umfassend:
zumindest einen Bildgebungssensor zur Erfassung einer Umgebung und Erzeugung von zugehörigen Bilddaten (14),
eine Datenverarbeitungseinheit (16), welche zumindest ein KI-Modell (18) mit Zero-Shot-Fähigkeit zur Verarbeitung der Bilddaten (14) umfasst,
und eine Benutzerschnittstelle (20) zur Eingabe einer Benutzeranfrage (22) in natürlicher Sprache,
wobei das KI-Modell (18) ausgebildet ist, basierend auf den Bilddaten (14) und der Benutzeranfrage (22) eine Ausgabeinformation (24) als Antwort auf die Benutzeranfrage (22), insbesondere in Echtzeit, auszugeben und
wobei die Datenverarbeitungseinheit (16) ausgebildet ist, basierend auf der Ausgabeinformation (24) eine Antwortaktion auszulösen.

2. System (10) nach Anspruch 1,
wobei das KI-Modell (18) basierend auf Trainingsbilddaten und zugehörigen Trainingsausgabeinformationen trainiert ist, insbesondere wobei die Trainingsbilddaten auf der erfassten Umgebung basieren.

3. System (10) nach Anspruch 1 oder 2,
wobei das System (10) ferner zumindest einen weiteren Sensor (26) umfasst, wobei das KI-Modell (18) ferner ausgebildet ist, die Ausgabeinformation (24) zusätzlich basierend auf Sensordaten (28) des weiteren Sensors (26) auszugeben.

4. System (10) nach Anspruch 3,
wobei der Bildgebungssensor, die Datenverarbeitungseinheit (16) und/oder der weitere Sensor auf einem autonomen Fahrzeug montiert ist.

5. System (10) nach einem der vorstehenden Ansprüche,
wobei die Datenverarbeitungseinheit (16) einen Programmable Logic Controller (PLC) umfasst.

6. System (10) nach einem der vorstehenden Ansprüche,
wobei die Benutzerschnittstelle (20) eine Anzeigeeinheit umfasst und dazu ausgebildet ist, in Folge einer Benutzeranfrage (22) Beispielbilddaten sowie zugehörige Beispielausgabeinformationen des KI-Modells (18) auf der Anzeigeeinheit anzuzeigen, wobei basierend auf einer Evaluierung der Beispielsausgabeinformationen durch den Benutzer das KI-Modell (18) optimiert wird.

7. System (10) nach einem der vorstehenden Ansprüche,
wobei die Antwortaktion zumindest eine der folgenden Aktionen umfasst: Anzeigen der Ausgabeinformation (24) auf der Anzeige der Benutzerschnittstelle (20), Speichern der Bilddaten (14), der Benutzeranfrage (22) und/oder der Ausgabeinformation (24) in einer Datenbank, Erzeugen und Übermitteln einer Nachricht an ein externes Gerät, Durchführung einer Sicherheitsaktion durch eine Maschine oder Ausgabe eines akustischen und/oder visuellen Signals.

8. System (10) nach einem der vorstehenden Ansprüche,
wobei die Antwortaktion über die Benutzerschnittstelle (20) vom Benutzer auswählbar ist.

9. System (10) nach einem der vorstehenden Ansprüche,
wobei die Bilddaten (14) und/oder die Trainingsbilddaten verschlüsselt und/oder anonymisiert sind.

10. System (10) nach einem der vorstehenden Ansprüche,
wobei das System (10) ausgebildet ist, zumindest eine der folgenden Arten von Benutzeranfragen (22) zu verarbeiten: Zustandsanfragen, Verlaufsanfragen, Anomalieerkennungsanfragen, konditionelle Anfragen oder eine Kombination davon.

11. System (10) nach einem der vorstehenden Ansprüche,
wobei die Bilddaten (14) Sequenzen von Bildern umfassen.

12. System (10) nach einem der vorstehenden Ansprüche,
wobei die Benutzerschnittstelle (20) ausgebildet ist, Benutzeranfragen (22) in Form von Spracheeingaben empfangen.

13. System (10) nach einem der vorstehenden Ansprüche,
wobei die Datenverarbeitungseinheit (16) eine Cloud (42) umfasst, auf der das KI-Modell (18) implementiert ist.

14. System (10) nach einem der vorstehenden Ansprüche,
wobei das KI-Modell (18) ein Large-Language-Modell (LLM), ein Large-Action-Model (LAM), ein Agentic System und/oder ein Large-Vision-Modell (LVM) umfasst.

15. Verfahren, insbesondere Sicherheitsverfahren, zur Unterstützung eines Benutzers bei der Auswertung von Bilddaten (14), welches umfasst, dass: von zumindest einem Bildgebungssensor eine Umgebung erfasst und zugehörige Bilddaten (14) erzeugt werden,
die Bilddaten (14) von zumindest einem KI-Modell (18) mit Zero-Shot-Fähigkeit verarbeitet werden,
über eine Benutzerschnittstelle (20) eine Benutzeranfrage (22) in natürlicher Sprache eingegeben wird,
und basierend auf den Bilddaten (14) und der Benutzeranfrage (22) eine Ausgabeinformation (24) als Antwort auf die Benutzeranfrage (22) von dem KI-Modell (18), insbesondere in Echtzeit, ausgegeben wird und
basierend auf der Ausgabeinformation (24) eine Antwortaktion ausgelöst wird.

## Geänderte Patentansprüche

### Geänderte Patentansprüche gemäss Regel 137(2) EPÜ.

1. System (10), insbesondere Sicherheitssystem, zur Unterstützung eines Benutzers bei der Auswertung von Bilddaten (14), umfassend:
zumindest einen Bildgebungssensor zur Erfassung einer Umgebung und Erzeugung von zugehörigen Bilddaten (14),
eine Datenverarbeitungseinheit (16), welche zumindest ein Kl-Modell (18) mit Zero-Shot-Fähigkeit zur Verarbeitung der Bilddaten (14) umfasst, wobei der Bildgebungssensor und die Datenverarbeitungseinheit (16) auf einem autonomen Fahrzeug montiert sind,
und eine Benutzerschnittstelle (20) zur Eingabe einer Benutzeranfrage (22) in natürlicher Sprache,
wobei das KI-Modell (18) ausgebildet ist, basierend auf den Bilddaten (14) und der Benutzeranfrage (22) eine Ausgabeinformation (24) als Antwort auf die Benutzeranfrage (22), insbesondere in Echtzeit, auszugeben und wobei die Datenverarbeitungseinheit (16) ausgebildet ist, basierend auf der Ausgabeinformation (24) eine Antwortaktion auszulösen.

2. System (10) nach Anspruch 1,
wobei das Kl-Modell (18) basierend auf Trainingsbilddaten und zugehörigen Trainingsausgabeinformationen trainiert ist, insbesondere wobei die Trainingsbilddaten auf der erfassten Umgebung basieren.

3. System (10) nach Anspruch 1 oder 2,
wobei das System (10) ferner zumindest einen weiteren Sensor (26) umfasst, wobei das KI-Modell (18) ferner ausgebildet ist, die Ausgabeinformation (24) zusätzlich basierend auf Sensordaten (28) des weiteren Sensors (26) auszugeben.

4. System (10) nach Anspruch 3,
wobei der weitere Sensor auf dem autonomen Fahrzeug montiert ist.

5. System (10) nach einem der vorstehenden Ansprüche,
wobei die Datenverarbeitungseinheit (16) einen Programmable Logic Controller (PLC) umfasst.

6. System (10) nach einem der vorstehenden Ansprüche,
wobei die Benutzerschnittstelle (20) eine Anzeigeeinheit umfasst und dazu ausgebildet ist, in Folge einer Benutzeranfrage (22) Beispielbilddaten sowie zugehörige Beispielausgabeinformationen des Kl-Modells (18) auf der Anzeigeeinheit anzuzeigen, wobei basierend auf einer Evaluierung der Beispielsausgabeinformationen durch den Benutzer das KI-Modell (18) optimiert wird.

7. System (10) nach einem der vorstehenden Ansprüche,
wobei die Antwortaktion zumindest eine der folgenden Aktionen umfasst: Anzeigen der Ausgabeinformation (24) auf der Anzeige der Benutzerschnittstelle (20), Speichern der Bilddaten (14), der Benutzeranfrage (22) und/oder der Ausgabeinformation (24) in einer Datenbank, Erzeugen und Übermitteln einer Nachricht an ein externes Gerät, Durchführung einer Sicherheitsaktion durch eine Maschine oder Ausgabe eines akustischen und/oder visuellen Signals.

8. System (10) nach einem der vorstehenden Ansprüche,
wobei die Antwortaktion über die Benutzerschnittstelle (20) vom Benutzer auswählbar ist.

9. System (10) nach einem der vorstehenden Ansprüche,
wobei die Bilddaten (14) und/oder die Trainingsbilddaten verschlüsselt und/oder anonymisiert sind.

10. System (10) nach einem der vorstehenden Ansprüche,
wobei das System (10) ausgebildet ist, zumindest eine der folgenden Arten von Benutzeranfragen (22) zu verarbeiten: Zustandsanfragen, Verlaufsanfragen, Anomalieerkennungsanfragen, konditionelle Anfragen oder eine Kombination davon.

11. System (10) nach einem der vorstehenden Ansprüche,
wobei die Bilddaten (14) Sequenzen von Bildern umfassen.

12. System (10) nach einem der vorstehenden Ansprüche,
wobei die Benutzerschnittstelle (20) ausgebildet ist, Benutzeranfragen (22) in Form von Spracheeingaben empfangen.

13. System (10) nach einem der vorstehenden Ansprüche,
wobei die Datenverarbeitungseinheit (16) eine Cloud (42) umfasst, auf der das KI-Modell (18) implementiert ist.

14. System (10) nach einem der vorstehenden Ansprüche,
wobei das KI-Modell (18) ein Large-Language-Modell (LLM), ein Large-Action-Model (LAM), ein Agentic System und/oder ein Large-Vision-Modell (LVM) umfasst.

15. Verfahren, insbesondere Sicherheitsverfahren, zur Unterstützung eines Benutzers bei der Auswertung von Bilddaten (14), welches umfasst, dass:
von zumindest einem Bildgebungssensor eine Umgebung erfasst und zugehörige Bilddaten (14) erzeugt werden,
die Bilddaten (14) von zumindest einem KI-Modell (18) mit Zero-Shot-Fähigkeit verarbeitet werden, wobei das KI-Modell (18) von einer Datenverarbeitungseinheit ausgeführt wird, wobei der Bildgebungssensor und die Datenverarbeitungseinheit (16) auf einem autonomen Fahrzeug montiert sind, über eine Benutzerschnittstelle (20) eine Benutzeranfrage (22) in natürlicher Sprache eingegeben wird,
und basierend auf den Bilddaten (14) und der Benutzeranfrage (22) eine Ausgabeinformation (24) als Antwort auf die Benutzeranfrage (22) von dem Kl-Modell (18), insbesondere in Echtzeit, ausgegeben wird und
basierend auf der Ausgabeinformation (24) eine Antwortaktion ausgelöst wird.
